# EUROPEAN PATENT APPLICATION

(11) **EP 3 839 762 A1**
(43) Date of publication of application: **23.06.2021**
(21) Application number: 21156574.2
(22) Date of filing: 15.03.2016
(51) Int. Cl.: G06F 16/27, H04L 29/08

(54) **REMOTE DATA SYNCHRONIZATION METHOD AND APPARATUS FOR DATABASE**

(30) Priority: 01.04.2015 CN 201510152707
(62) Divisional of application: 16771247.0
(71) Applicant: Advanced New Technologies Co., Ltd., George Town, Grand Cayman KY1-9008 (KY)
(72) Inventor: TONG, Yin, Hangzhou, Zhejiang 310000 (CN)
(74) Representative: Fish & Richardson P.C.

(57) **Abstract**

The present application provides a remote data synchronization method and apparatus for a database, wherein the method comprises: acquiring service data updated in a data update event, generating an event version corresponding to the data update event, and encapsulating the service data and the event version into an event object; and transmitting the event object to a peer-end service application, so that when the peer-end service application determines according to the event version that the data update event is valid, a peer-end database is updated according to the service data. The present application realizes rapid and reliable data synchronization.

## Description

### Technical Field

The present application relates to database technologies, and in particular to a remote data synchronization method and apparatus for a database.

### Background Art

Data synchronization between databases deployed at different locations is usually involved in database-related applications. In case that databases at two ends in need of data synchronization are located relatively far from one another, traditional database synchronization technologies lead to higher synchronization delay and lower synchronization efficiency, and when the same object is altered by the two ends, high delay may also cause data collision on the database sides such that correct data modification is denied by the databases, thereby causing inconsistency of the data of the databases at the two ends, and low reliability.

### Summary of the Invention

In view of the above, the present application provides a remote data synchronization method and apparatus for a database, in order to realize rapid and reliable data synchronization.

Specifically, the present application is implemented through the technical solution as follows:
In a first aspect, a remote data synchronization method for a database is provided, the method is executed by a service application, the database is used for storing data of the service application; the method comprises:
acquiring service data updated in a data update event, generating an event version corresponding to the data update event, and encapsulating the service data and the event version into an event object; and
transmitting the event object to a peer-end service application, so that when the peer-end service application determines according to the event version that the data update event is valid, a peer-end database is updated according to the service data.

In a second aspect, a remote data synchronization method for a database is provided, the method is executed by a service application, the database is used for storing data of the service application; the method comprises:
receiving an event object sent by a peer-end service application, the event object comprising: service data updated in a data update event, and an event version corresponding to the data update event; and
updating a local database according to the service data updated in the data update event when determining according to the event version that the peer-end data update event is valid.

In a third aspect, a remote data synchronization apparatus for a database is provided, the apparatus is disposed in a service application, the database is used for storing data of the service application; the apparatus comprises:
an event encapsulating module, which is configured to acquire service data updated in a data update event, generate an event version corresponding to the data update event, and encapsulate the service data and the event version into an event object; and
an event sending module, which is configured to transmit the event object to a peer-end service application, so that when the peer-end service application determines according to the event version that the data update event is valid, a peer-end database is updated according to the service data.

In a fourth aspect, a remote data synchronization apparatus for a database is provided, the apparatus is disposed in a service application, the database is used for storing data of the service application; the apparatus comprises:
an event receiving module, which is configured to receive an event object sent by a peer-end service application, the event object comprising: service data updated in a data update event, and an event version corresponding to the data update event; and
a data update module, which is configured to update a local database according to the service data updated in the data update event when it is determined according to the event version that the peer-end data update event is valid.

According to the remote data synchronization method and apparatus for a database provided in the present application, rapid transmission of data update information is realized by encapsulating, by the service application, the updated data and event version into an event object and then transmitting the event object to the peer-end application; furthermore, the order of occurrence of the data update events can be specified by means of event versions, thus ensuring rapid and reliable data synchronization.

### Brief Description of the Drawings

Fig. 1 illustrates an application scenario of data synchronization in an example;
Fig. 2 illustrates platform architecture of data synchronization in an example;
Fig. 3 illustrates an execution flow of an event sending end of data synchronization in an example;
Fig. 4 is a schematic structural diagram of a service application in an example;
Fig. 5 illustrates an execution flow of an event receiving end of data synchronization in an example; and
Fig. 6 is a structural diagram of a remote data synchronization apparatus in an example.

### Detailed Description

The exemplary embodiments will be described herein in details, with the examples thereof being represented in the drawings. Unless otherwise stated, like numerals throughout different drawings indicate like or similar elements when the description below refers to the drawings. The implementations described in the following exemplary embodiments are not intended to represent all the implementations consistent with the present application. Instead, they are merely examples of the apparatus and method as detailed in the appended claims and consistent with some aspects of the present application.

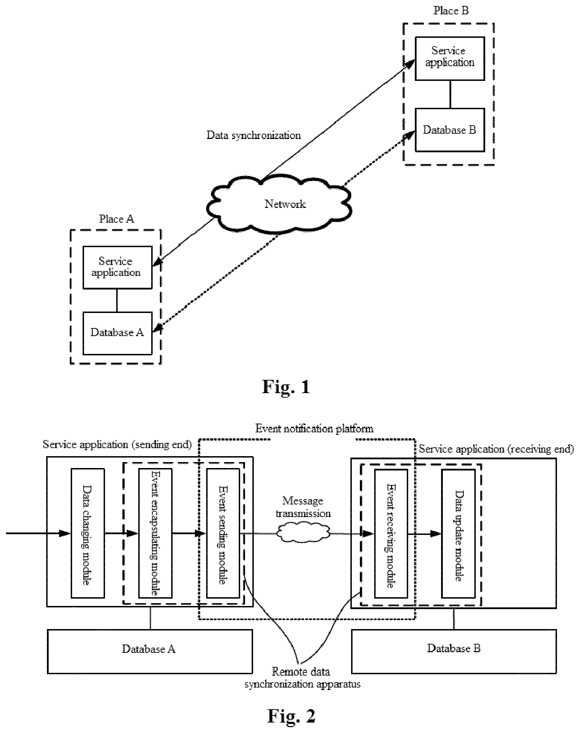

Fig. 1 illustrates an application scenario of data synchronization. As shown in Fig. 1, it is assumed that "service application" is an application intended to acquire and store user information, e.g. storing account, phone number and other such user information of an Alipay™ user. This service application is deployed at both Place A and Place B, and these two places are far from each other, such as China and U.S.A., Hebei Province and Jiangsu Province, or the like. User information of the service application is stored in databases, for example, user information (e.g., user information derived from a user's registration on the website of Alipay™) acquired by the service application at Place A is stored in Database A, while user information acquired at Place B is stored in Database B. Based on service requirements, the user information obtained at Place A needs to be synchronized to Place B, and similarly the user information obtained at Place B also needs to be synchronized to Place A, to ensure a consistency of the data of the databases at these two places, which then involves remote data synchronization between Database A and Database B.

The remote data synchronization method in this embodiment differs from the traditional mode of data synchronization between databases (as shown by the dotted array in Fig. 1, data synchronization is directly carried out between Database A and Database B) in that data synchronization processing is executed by application layers, i.e. service applications (as shown by the solid array in Fig. 1, data synchronization occurs between the service applications at two places). From the perspective of both delay performance and reliability, synchronization by the database layers and synchronization by the application layers will be compared hereinafter.

Delay performance: the mode of regular synchronization is typically employed by databases as their database synchronization mechanism. For example, whether information stored in the database is updated is checked at regular intervals, and if so, the data updated within this time interval is transmitted to a peer end. In addition, as for the mode of transmission, it will be exemplified by changing user name in one piece of user data. When this user name is changed by the database, it is possible that multiple database instructions (e.g., multiple SQL statements) are executed to realize data update; and at the time of synchronization to the peer end, these multiple database instructions likewise need to be transmitted to the peer end, and further need to be sent to the peer end in accordance with the order of their execution (e.g., the next instruction is sent upon receipt of the feedback from the peer end that one of these instructions has been successfully received). All these factors may result in a relatively low rate of data transmission to the peer-end database, and in particular this rate of data transmission will be dramatically decreased in remote (such long-distance) data synchronization.

Yet in the data synchronization method of this embodiment, every time there occurs a data update, the service application is capable of immediately sending the updated data to the peer end in real time. And when it comes to the mode of transmission, the service application can acquire information regarding this data update at a service level. For instance, attention is paid to the results of this data update, rather than SQL statements at a more specific operational level. For example, as a result of execution of multiple database instructions, user name in one piece of user data is changed; besides, the service application can also acquire more information at the service level, e.g., which piece of user data the changed user name belongs to, and mark the time of occurrence of this data update event. That is to say, it is possible for the service application to regard this data update wholly as an event, and at the time of transmission to the peer end, to transmit the data update results of this event directly to the peer end at a time, which is more concise and rapid.

Reliability: the traditional mechanism of database synchronization has its own defect that it is quite difficult for the database itself to determine the order of occurrence of data updates at two ends when the two ends where data synchronization is executed are on the verge of simultaneously modifying database documents, and this fact leads to the situation where the database denies those originally correct data updates after considering them as data collision. In this embodiment, the service application layer can record time marks for data updates at the local end, and can also judge the order of the various data updates depending on the time marks and select and update the latest data to the database, which is to say, the application layer has the capability of executing more processing, enabling data synchronization for the database more reliable.

On the basis of the above description, the remote data synchronization method in the embodiment of the present application is executed by the service application. Fig. 2 illustrates the principle of this data synchronization method, in which it is assumed that data update occurs in Database A at Place A and then data is required to be synchronized from Place A to Place B, and at this moment, the service application at Place A serves as a sending end for data synchronization, whereas the service application at Place B is utilized as a receiving end for data synchronization. Fig. 2 illustrates processing modules that each of the service application serving as the sending end and the service application serving as the receiving end comprises. It should be noted that when data is synchronized from Place B to Place A, the service application at Place B comprises the various modules of the service application at Place A in Fig. 2, and similarly the service application at Place A also comprises the various modules of the service application at Place B, namely there is a consistent flow in the reverse direction. Only the processing procedure of data synchronization in one of the directions is described in the embodiment given below.

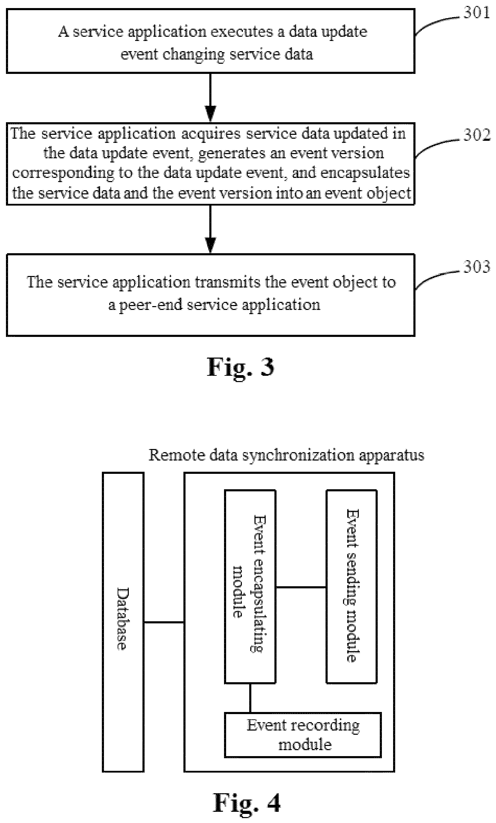

Fig. 3 illustrates a flow of the remote data synchronization method executed by the service application at Place A serving as the sending end. The method, as shown in Fig. 2 and Fig. 3, may comprise the following steps.

301. A service application executes a data update event changing service data.

By way of example, the service application receives a request from a user for changing its user name from Jim to Tom via an application site, and then the service application can hereby modify the database, e.g., the application can finish the above change in user name by operating the database via a database interface. This data change may be referred to as one "data update event".

In this embodiment, stored in the database are data documents, each of which comprises user information stored therein. The various pieces of different user information in the database may be stored in different rows, and every single piece of row information may be referred to as a data storage unit. For example, the first data storage unit is used to store information of User Y1, e.g., User: {id=1, name=Jim}, and this unit, of course, may further comprise more information, e.g., User:{id=1, name=Jim, phone=132****1112}; the second data storage unit is used to store information of User Y2, e.g., User: {id=2, name=Mary}. Wherein id in the user information may be referred to as a service main key that is used for distinguishing different service data, and in this embodiment, different ids are used for distinguishing different user information. The service main key may not be used if only the information of one user is present.

In this step, the change in service data executed in the data update event may be directed to a part of data in one piece of user information, e.g., only name may be modified in the user information User:{id=1, name=Jim, phone=132****1112}. But for the application service in this embodiment that is used to store user information, this embodiment may refer to the abovementioned user information wholly as one piece of service data. As shown in Fig. 2, the change in service data may be executed by a data changing module in the service application.

302. The service application acquires service data updated in the data update event, generates an event version corresponding to the data update event, and encapsulates the service data and the event version into an event object.

By way of example, following the change in service data executed by the data changing module of the service application, e.g., changing name of the user from Jim to Tom, the service application also needs to acquire service data corresponding to this change, i.e. acquiring User: {id=1, name=Tom}. That is to say, this data change is a change in name of this piece of service data.

The service application also generates an event version that corresponds to this data update event. In this embodiment, the data updates for database data, such as one addition, deletion and modification, may all be referred to as one data update event, and according to the order of occurrence of the events, "event versions" are recorded to represent the chronological order of the events, e.g., the version of the event that occurs for the first time may be "1", i.e. version=1, the version of the event that occurs for the second time may be upwards increased progressively by step 1, i.e. version=2, and so on. Certainly, the progressive increase step for event version is not necessarily 1. e.g., the step may be 2, the version of the event which occurs for the first time is 1, and the version of the second event which occurs for the second time is 3; alternatively, event versions may not be necessarily represented by numbers, and instead, for example, may be represented by time stamps for occurrence of the events. For example, the version of the event that occurs for the first time is 2014.12.31, the version of the event that occurs for the second time is 2015.1.20, and the chronological order of occurrence of the events may also be identified through these time stamps.

In this step, as shown in Fig. 2, the above operations of acquiring the service data and generating the event version may be executed by an event encapsulating module of the service application, and moreover the event encapsulating module may encapsulate the service data and the event version into an event object. For instance, the encapsulated event object may be Event: {user={id=1, name=Tom},version=1}. In case that multiple pieces of user information are stored in the service application, the event object as indicated above may comprise a service main key to indicate which user this event object is corresponding to.

303. The service application transmits the event object to a peer-end service application.

By way of example, as shown in Fig. 2, the event object encapsulated by the service application may be sent by an event sending module to a peer-end service application (i.e. a remote peer end that is in need of data synchronization), and subsequently received by an event receiving module of the peer-end service application. In this embodiment, the event sending module at the sending end and the event receiving module at the receiving end may be collectively referred to as an "event notification platform", which serves to transmit the event object encapsulated by the service application, and transmission may be completed in the form of messages.

Real-time transmission can be achieved by transmitting the events through the event notification platform. For example, the service application, subsequent to data updates for the database, can complete a real-time encapsulation into the event object and transmit the event object to the peer end through the event notification platform, and this significantly improves synchronization efficiency as compared to traditional regular database synchronization. Furthermore, with regard to one data update, the event notification platform is able to transmit, through one Event object event, the information of this data update to the peer end at a time, which increases the rate of data synchronization with respect to the traditional mode that the database sequentially transmits multiple pieces of instruction information included in one data update. In transnational data synchronization, for example, this platform has the capability to support transnational transmission of one event to the peer end on the order of near milliseconds.

In this embodiment, after encapsulating the service data and the event version into an event object, the service application may also record the event object. By reference to the example of Fig. 4, the service application may also comprise an event recording module, this module may be configured to record event objects, and the event objects may be recorded in the database; and every event object may be recorded, such as:
Event: {user={id=1, name=Jim}, version=0};
Event: {user={id=1, name=Tom}, version=1};

On the one hand, recording of the event objects can be used, upon receipt of the event object sent by the peer end (i.e. as the receiving end), to extract information regarding event version from the recorded event object, in order to determine event validity, and for this processing, reference may be made to the subsequent description of the method executed by the receiving end. And on the other hand, recording of all the event objects facilitates a better knowledge of the data change procedure and accordingly historical traceability is attained.

Recording of the event objects by the event recording module may be executed either before the event encapsulating module finishes the encapsulation into the event object and sends the event object, or after the event object is sent by the event sending module.

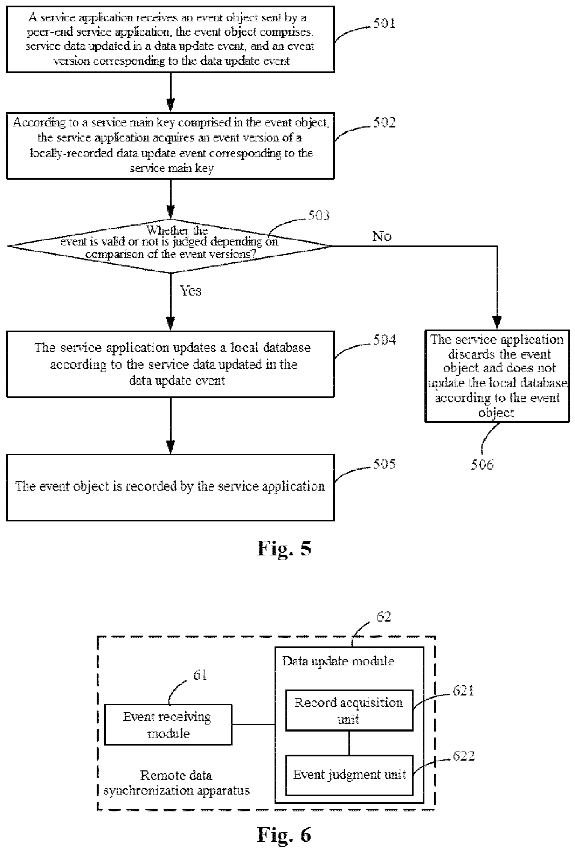

Fig. 5 illustrates a flow of the remote data synchronization method executed by the service application at Place B serving as the receiving end. The method, as shown in Fig. 2 and Fig. 5, may comprise the following steps.

501. A service application receives an event object sent by a peer-end service application, the event object comprises: service data updated in a data update event, and an event version corresponding to the data update event.

By way of example, as the receiving end, the service application can receive, by means of an event receiving module, an event object sent by a peer end, and this event object may comprise service data and event version, e.g., the event object Event: {user={id=1, name=Tom}, version=1} mentioned in the above example; when information of more than one users is stored in the database, the service data of the event object at least comprises a service main key and data to be updated, and this service main key is used for distinguishing different user information.

502. According to the service main key comprised in the event object, the service application acquires an event version of a locally-recorded data update event corresponding to the service main key.

By way of example, as shown in Fig. 2, a data update module in the service application may de-capsulate the event object and thus acquire the service main key and event version comprised in the event object, e.g., in the above-described event, the service main key id=1, and the event version version=1.

It is mentioned in the example shown in Fig. 3 that through the event recording module, the service application itself may record the event objects that have occurred. In this step, according to service main key id=1 in the received peer-end event object, the data update module can acquire the event version of the locally-recorded data update event corresponding to the service main key, e.g., extracting information regarding the service main key and the event version, such as {id=1, version=0}, from the locally-recorded event record. If a plurality of event versions corresponding to the same id are locally recorded, then the event version of the event that occurs last is acquired, e.g., the latest time or the largest version number.

503. The service application judges according to the event version whether the received data update event is valid or not.

By way of example, the data update module of the service application may compare the locally-recorded event version with the event version of the received peer-end event corresponding to the same id; if the peer-end event occurs later in time, then the peer-end event is valid, meaning that it is the latest data update event; and if the peer-end event occurs earlier in time, then it means that the latest data update event has been locally recorded and the peer-end event is invalid.

When whether the data update event is valid or not is specifically judged, the numbers of the event versions can be compared in the above example. If the event version version=1 of the peer-end event is larger than the event version version=0 of the local end, then it is determined that the data update event of the peer end is valid, and proceed to execute 504; otherwise, it is assumed that the event version of the peer end is lower than the event version of the local end, and then the peer-end event is determined to be invalid and 506 may be executed. In addition, in the event that the event versions are represented by time stamps, these time stamps are likewise compared with each other to judge the chronological order of occurrence of the events of the local end and the peer end.

504. The service application updates a local database according to the service data updated in the data update event.

By way of example, after determining that the data update event of the peer end is valid, the service application can call a database interface to change the corresponding service data in the database. That is, the local service data is updated to user={id=1, name=Tom} according to user={id=1, name=Tom}.

505. The event object is recorded by the service application.

By way of example, the service application, after updating the service data in the local database according to the data update event of the peer end, also updates a locally-recorded event object according to this event, and as mentioned in the above example, the service application may record the latest event object Event: {user={id=1, name=Tom}, version=1} in the local database through the event recording module, and reserve historical event records for purposes of tracing. In practice, the event object can be recorded either after it is determined that the event of the peer end is valid, or after the local database is updated.

506. The service application discards the event object and does not update the local database according to the event object.

The service application of this embodiment identifies the order of occurrence of the various data update events using the event versions, which helps accurately identify the latest event and ensures accurate updates for the database. For example, the latest data update can still be accurately identified by comparison of the event versions even though the two ends are on the verge of simultaneously changing the data of the same target.

According to the remote data synchronization method of this embodiment, this event-based data synchronization enables real-time transmission of information regarding data updates, and also relatively fast event transmission. Furthermore, the order of different data updates can also be distinguished through event versions, thereby guaranteeing the accuracy and reliability of data updates for the database.

It can be seen from the above description that the service applications at the sending and receiving ends both comprise a remote data synchronization apparatus, such as those shown in Fig. 2 and Fig. 4, and this remote data synchronization apparatus is used to execute the remote data synchronization method of this embodiment through various modules contained therein. Furthermore, for the service application at the receiving end, the structure of its remote data synchronization apparatus may be seen in Fig. 6, comprises a data receiving module 61 and a data update module 62, wherein the data update module 62 may comprise a record acquisition unit 621 and an event judgment unit 622.

The record acquisition unit 621 is configured to acquire, according to a service main key comprised in the event object, an event version of a locally-recorded data update event corresponding to the service main key, the service main key being used for distinguishing different service data.

The event judgment unit 622 is configured to compare the local event version with a peer-end event version, and determine that the peer-end data update event chronologically occurs after the locally-recorded data update event.

The description above is merely the preferred embodiments of the present application, and is not intended to limit the present application. Any modification, equivalent replacement, improvement, etc. made within the spirit and principle of the present application shall be included within the scope of the present application.

### EMBODIMENTS

Although the present invention is defined in the attached claims, it should be understood that the present invention can also (alternatively) be defined in accordance with the following embodiments:
1. A remote data synchronization method for a database, characterized in that the method is executed by a service application, the database is used for storing data of the service application; the method comprises:
   acquiring service data updated in a data update event, generating an event version corresponding to the data update event, and encapsulating the service data and the event version into an event object; and
   transmitting the event object to a peer-end service application, so that when the peer-end service application determines according to the event version that the data update event is valid, a peer-end database is updated according to the service data.
2. The method according to embodiment 1, characterized in that the event object further comprises a service main key, and the service main key is used for distinguishing different service data.
3. The method according to embodiment 1, characterized in that the method, after encapsulating the service data and the event version into an event object, further comprises: recording the event object.
4. A remote data synchronization method for a database, characterized in that the method is executed by a service application, the database is used for storing data of the service application; the method comprises:
   receiving an event object sent by a peer-end service application, the event object comprising: service data updated in a data update event, and an event version corresponding to the data update event; and
   updating a local database according to the service data updated in the data update event when determining according to the event version that the peer-end data update event is valid.
5. The method according to embodiment 4, characterized in that the determining according to the event version that the peer-end data update event is valid comprises:
   determining according to the event version that the peer-end data update event chronologically occurs after a locally-recorded data update event.
6. The method according to embodiment 5, characterized in that the determining according to the event version that the peer-end data update event chronologically occurs after a locally-recorded data update event comprises:
   acquiring, according to a service main key comprised in the event object, an event version of the locally-recorded data update event corresponding to the service main key, the service main key being used for distinguishing different service data; and
   comparing the local event version with a peer-end event version, and determining that the peer-end data update event chronologically occurs after the locally-recorded data update event.
7. The method according to embodiment 4, characterized in that the method, after determining according to the event version that the peer-end data update event is valid, further comprises: recording the event object.
8. A remote data synchronization apparatus for a database, characterized in that the apparatus is disposed in a service application, the database is used for storing data of the service application; the apparatus comprises:
   an event encapsulating module, which is configured to acquire service data updated in a data update event, generate an event version corresponding to the data update event, and encapsulate the service data and the event version into an event object; and
   an event sending module, which is configured to transmit the event object to a peer-end service application, so that when the peer-end service application determines according to the event version that the data update event is valid, a peer-end database is updated according to the service data.
9. The apparatus according to embodiment 8, characterized in that the event object further comprises: a service main key, and the service main key is used for distinguishing different service data.
10. A remote data synchronization apparatus for a database, characterized in that the apparatus is disposed in a service application, the database is used for storing data of the service application; the apparatus comprises:
   an event receiving module, which is configured to receive an event object sent by a peer-end service application, the event object comprising: service data updated in a data update event, and an event version corresponding to the data update event; and
   a data update module, which is configured to update a local database according to the service data updated in the data update event, when it is determined according to the event version that the peer-end data update event is valid.
11. The apparatus according to embodiment 10, characterized in that the data update module comprises:
   a record acquisition unit, which is configured to acquire, according to a service main key comprised in the event object, an event version of a locally-recorded data update event corresponding to the service main key, the service main key being used for distinguishing different service data; and
   an event judgment unit, which is configured to compare the local event version with a peer-end event version, and determine that the peer-end data update event chronologically occurs after the locally-recorded data update event.
12. The apparatus according to embodiment 10, characterized in that the apparatus further comprises:
   an event recording module, which is configured to record the event object after it is determined according to the event version that the peer-end data update event is valid or after the service data and the event version are encapsulated into the event obj ect.

## Claims

1. A remote data synchronization method for synchronizing data between a first database deployed at a first location and a second database deployed at a different, second location, **characterized in that** the remote data synchronization method is executed by synchronization of application layers of a service application deployed correspondingly at both the first location and the second location, wherein the first and the second databases are used for storing data of the service application, wherein the method comprises:
acquiring (302), by a sending-end deployment of the service application at a service level, service data updated in a data update event;
generating (302), by the sending-end deployment of the service application, an event version corresponding to the data update event, wherein the event version is represented by a time stamp indicating when the event occurred at the service level;
encapsulating (302), by the sending-end deployment of the service application, the service data and the event version into an event object;
transmitting (303), by the sending-end deployment of the service application, the event object to a receiving-end service deployment of the application (303);
receiving (501), by the receiving-end service deployment of the application, the event object sent by the sending-end deployment of the service application, the event object comprising
the service data updated in the data update event, and
the event version corresponding to the data update event and represented by the time stamp indicating when the event occurred at the service level;
determining according to the event version whether the received data update event is valid; and
when it is determined that the received data update event is valid, updating, by the receiving-end deployment of the service application, a local database according to the service data updated in the data update event.

2. The method according to claim 1, wherein the event object further comprises a service main key, wherein the service main key is configured to be used for distinguishing different service data.

3. The method according to claim 1, wherein the method, after encapsulating the service data and the event version into the event object, further comprises recording, by the sending-end deployment of the service application, the event object to represent a chronological order of events.

4. The method according to claim 1, **characterized in that** the determining according to the event version that the received data update event is valid comprises:
determining, by the receiving-end deployment of the service application, according to the event version that the received data update event chronologically occurs after a locally-recorded data update event.

5. The method according to claim 4, **characterized in that** the determining according to the event version that the received data update event chronologically occurs after a locally-recorded data update event comprises:
acquiring, by the receiving-end deployment of the service application and according to a service main key comprised in the event object, an event version of the locally-recorded data update event corresponding to the service main key, the service main key being used for distinguishing different service data;
comparing, by the receiving-end deployment of the service application, the local event version with a peer-end event version; and
determining, by the receiving-end deployment of the service application, that the received data update event chronologically occurs after the locally-recorded data update event.

6. The method according to claim 1, **characterized in that** the method, after determining according to the event version that the received data update event is valid, further comprises:
recording, by the receiving-end deployment of the service application, the event object to represent a chronological order of events.
